(19) Europäisches Patentamt / European Patent Office / Office européen des brevets

(11) **EP 2 109 937 B1**

(12) **EUROPEAN PATENT SPECIFICATION**

(45) Date of publication and mention of the grant of the patent:
**25.05.2011 Bulletin 2011/21**

(51) Int Cl.:
*H04B 1/00* (2006.01)  *G06F 9/46* (2006.01)
*H04B 1/16* (2006.01)

(21) Application number: **08702286.9**

(22) Date of filing: **18.01.2008**

(86) International application number:
**PCT/IB2008/000133**

(87) International publication number:
**WO 2008/087550 (24.07.2008 Gazette 2008/30)**

(54) **A DIGITAL MULTI-CHANNEL SYSTEM FOR PROCESSING RADIO SIGNALS, IN PARTICULAR OF THE VERY WIDE BAND TYPE**

DIGITALES MEHRKANALSYSTEM ZUR VERARBEITUNG VON FUNKSIGNALEN, INSBESONDERE ULTRABREITBANDSIGNALEN

SYSTÈME MULTIPLEX NUMÉRIQUE POUR LE TRAITEMENT DES SIGNAUX RADIO, EN PARTICULIER DU TYPE TRÈS LARGE BANDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.01.2007 IT RM20070025**

(43) Date of publication of application:
**21.10.2009 Bulletin 2009/43**

(73) Proprietor: **Istituto Nazionale Di Astrofisica - INAF 00136 Roma (IT)**

(72) Inventor: **TUCCARI, Gino I-95127 Catania (IT)**

(74) Representative: **Baroni, Matteo Bugnion S.p.A. Viale Lancetti, 17 20158 Milano (IT)**

(56) References cited:
US-A1- 2004 049 609    US-A1- 2004 190 553
US-A1- 2005 202 842    US-A1- 2006 015 674
US-A1- 2006 121 934    US-A1- 2006 126 569
US-A1- 2006 291 428    US-B1- 6 727 842
US-B1- 6 768 901

• KOENIG W ET AL: "FOLLOWING THE SOFTWARE-RADIO-IDEA IN THE DESIGN CONCEPT OF BASE STATIONS - POSSIBILITIES AND LIMITATIONS//APPLICATION DU CONCEPT DE RADIO LOGICIELLE A LA CONCEPTION DES STATIONS DE BASE - POSSIBILITES ET LIMITATIONS" ANNALES DES TELECOMMUNICATIONS - ANNALS OF TELECOMMUNICATIONS, GET LAVOISIER, PARIS, FR, vol. 57, no. 7/08, 1 July 2002 (2002-07-01), pages 613-625, XP001124780 ISSN: 0003-4347

**Description**

Technical Field

This invention relates to a digital multi-channel system for processing radio signals, of the very wide band type, applicable in particular as a radio astronomic receiver in the data acquisition chain for very long base interferometry, or VLBI, and which is modular, flexible, reliable, simple and efficient, with an extremely wide operating band, a very limited size, and very low production, installation and maintenance costs.

The invention also relates to a radio astronomic receiver equipped with a digital multi-channel system of this type.

The system according to the invention is described herein purely by way of non-limiting example with reference to its application in radio astronomic receivers. It will be understood, however, that the system according to the invention can be applied to the fields of civil, military and space telecommunications (such as, for example, in mobile telephony, satellite reception, narrow or broad band land communications) and electro-medical instruments (for example, for detecting electromagnetic fields at frequencies up to several GHZ) without departing from the scope of the invention.

Background Art

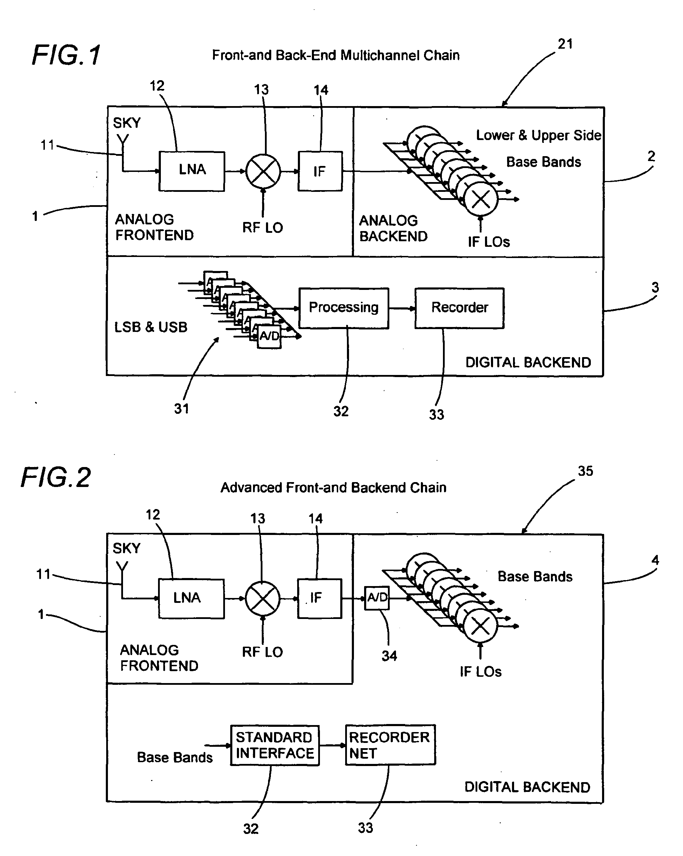

It is known that radio astronomic receivers comprise data receiving and processing apparatus including a front-end stage and a back-end stage. As shown in Figure 1, the front-end stage 1 comprises an antenna 11, a low-noise amplifier 12, a mixer 13 for band conversion from radiofrequency, or RF, to intermediate frequency, or IF, and an IF filter 14. The back-end stage is divided into a first unit 2, comprising a bank 21 of mixers, each used for converting from IF band to a specific baseband to obtain a specific channel of a plurality of channels, and a second unit 3, comprising a bank 31 analogue/digital, or A/D, converters, each of which receives an input signal from a corresponding mixer of the bank 21, and whose output signals are processed by a VLBI standard interface (VSI) sub-unit 32 which sends them to a data recording and/or transmission sub-unit 33.

In current radio telescopes where the back-end stage 2 is a standard VLBI stage, the first unit 2, like the front-end stage 1 is substantially analogue, while the second unit 3 is digital. In other words, the first unit 2 processes the signals from the front-end stage by analogue methods up to a maximum 16 MHz band frequency conversion, while the second unit 3 converts the signals from the analogue domain to the digital domain while formatting, transmitting and/or recording the data. No digital data processing occurs other than the entry of additional information such as temporal markers and auxiliary formatting data.

The main disadvantage of these conventional systems is that since the first unit 2 is analogue, it introduces significant noise components on the channels obtained, thus reducing their reliability and precision.

Some systems have been proposed recently which advance the conversion of the signals from the analogue domain to the digital domain, placing the A/D converters at the beginning of the back-end stage. In particular, with reference to Figure 2, the Haystack Observatory, in collaboration with the Space Sciences Laboratory of the University of California, Berkeley, has developed a VLBI wide band digital back-end system 4 for geodetic applications, comprising in a single electronic board an A/D conversion unit 34 and digital filters 35 equipped with dynamically programmable field programmable gate array (FPGA) devices that convert from IF band to baseband. The same electronic board also mounts a VSI interface 32 and the data recording/transmission sub-unit 32.

The system developed by the Haystack Observatory is not free of disadvantages, however.

First of all, it does not provide for channel tuning since it is used for geodetic research.

Moreover, it is relatively inflexible since its dimensioning is predetermined and thus, although the FPGA filters 35 can be configured to permit selection of the number of output channels obtained, the frequency and bandwidth of the channels are predetermined.

Furthermore, even the system developed by the Haystack Observatory does not perform digital signal processing other than channel selection.

Document US 2004/049609 discloses A layered mechanism for integrating programmable devices into software based frameworks for distributed processing wherein the software framework interfaces with an adaptation layer, which in turn interfaces with a programmable device, such as a field programmable gate array (FPGA). The adaptation layer specifies and enforces compatible electrical, physical and logical interfaces between the programmable device and the software-based framework of which the device the application running on it, and the adaptation layer form a component

Document US 2006/126569 discloses a terminal board applied to a multi-band and multi-carrier wireless system and an apparatus thereof. The terminal platform apparatus according to an exemplary embodiment of the present invention includes a multi-band multi-carrier terminal platform based, a monitoring device, an RF unit for a multi-band multi-carrier system, and a GPS/power source supply. The multi-band multi-carrier terminal platfrom board achieves high speed data processing and high quality data transmission by using a plurality of high performance PPGAs, an ARM processor, a DPRAM, and a CardBus interface. The monitoring device performs real-time debagging operations, and the GPS/power source supply supplies a power source to the multi-band multi-carrier terminal platform board.

Document US 2006/015674 discloses a self-booting software defined radio (SDR) module which may be embodied as a PCMCIA, Compact. Flash, or other plug in form factor module. The performance characteristics of the module, may include the radio frequency (RF) carrier frequency, instantaneous RF bandwidth, carrier modulation and demodulattion, symbol coding and decoding, security, and network protocol that can be altered and saved by means of computer software transferred to the module from a host device such as a cellular telephone, personal digital assistant, lap top computer or other programming device.

Document US 2004/190553 discloses a flexible, scalable channelized processing system composed of a relatively small number of component types. It extends switching fabric concepts into the processor FPGAs to create advantageously thereby a "processing fabric that allows the same buses to be shared by multiple data channels, that assists on coordinating the timing of events, and that assists on management functions (related to administration, monitoring and supervision) of the procesing.

Document US 2006/291428 discloses An adaptive multi-channel (AMC) modem that can receive one or multiple spread spectrum signals simultaneously and includes an adjustable filter, a $\Delta\Sigma$ ADC, and a digital processor. The adjustable filter filters an input signal with an adjustable bandwidth and provides an output siganl comprised of a selected number of spread spectrum signals. The $\Delta\Sigma$ ADC digitizes the output signal and provides data samples. The sampling rate and/or the reference voltage of the $\Delta\Sigma$ ADC may be varied to obtain the desired performance. The digital processor processes the data samples for each spread spectrum signal to recover data seat in that signal. A controller ascertains the operating conditions (e.g., the desired signal level, the undesired signal level, and so on) and selects the number of spread spectrum signals to receive based on the operating conditions, user requirements, and possibly other factors.

Disclosure of the Invention

The aim of this invention is therefore to provide a system that allows very wide band radio signals to be processed in a dynamically flexible, reliable, simple and efficient manner, in particular in the VLBI data acquisition chain for radio astronomic receivers.

Another aim of the invention is to provide a system of this type that occupies very little space and that is economical in terms of production, installation and maintenance costs.

This invention has for a specific object a digital multi-channel system for processing radio signals, in particular of the very wide band type, as defined in the independent claim 1.

Other embodiments of the system are described in the dependent claims from 2 to 8.

This invention has for another specific object a radio astronomic receiver as defined in the independent claim 9.

Brief Description of the Drawings

This invention is now described, by way of non-limiting example with reference to the accompanying drawings which illustrate preferred embodiments of it and in which

Figure 1 is a block diagram representing a first radio astronomic receiver according to prior art;
Figure 2 is a block diagram representing a second radio astronomic receiver according to prior art;
Figure 3 is a block diagram representing another radio astronomic receiver comprising a preferred embodiment of the system according to the invention;
Figure 4 is a block diagram of the preferred embodiment of the system according to the invention;
Figure 5 is a logic diagram schematically representing a first portion of the operations performed by the system of Figure 4 configured according to a first configuration; and
Figure 6 is a logic diagram schematically representing a second portion of the operations performed by the system of Figure 4 configured according to the first configuration.

Detailed Description of the Preferred Embodiments of the Invention

In the accompanying drawings similar items are labelled with the same reference numerals.

The inventor has developed a data processing system that converts the frequency of radio signals and is designed for use in particular in a radio astronomic receiver as a back-end unit in the data acquisition chain for very long base interferometry (VLBI), that is to say, with very long distances between the national, continental and intercontinental receiving elements, for astronomic, geodetic and space research. The system according to the invention constitutes a multi-channel system for the flexible formation of frequency-converted channels that are independent in terms of bandwidth and tuning. In particular, the system according to the invention allows the production of digital radio systems operating at frequencies higher than those of systems currently available on the market.

The system according to the invention is based on a modular FPGA architecture which, in the preferred embodiment, permits processing of frequency bandwidths of up to more than 1 GHz for frequency intervals of up to more than 3 GHz. The circuit architecture developed also permits a more general use of VLBI technology.

More specifically, the modular FPGA architecture digitally converts the frequency band and selects the channels obtained and is capable of frequency conversions to obtain tunable narrow bands up to 16 MHz and wide bands from 32 to 1024 MHz in octave increments with fixed basebands.

The system according to the invention advances the conversion from the analogue to the digital domain through A/D converters located upstream of digital units for converting frequency from IF to baseband. This makes it possible to use numeric methods to perform frequency conversion, filtering and any other additional data processing operation such as noise mitigation.

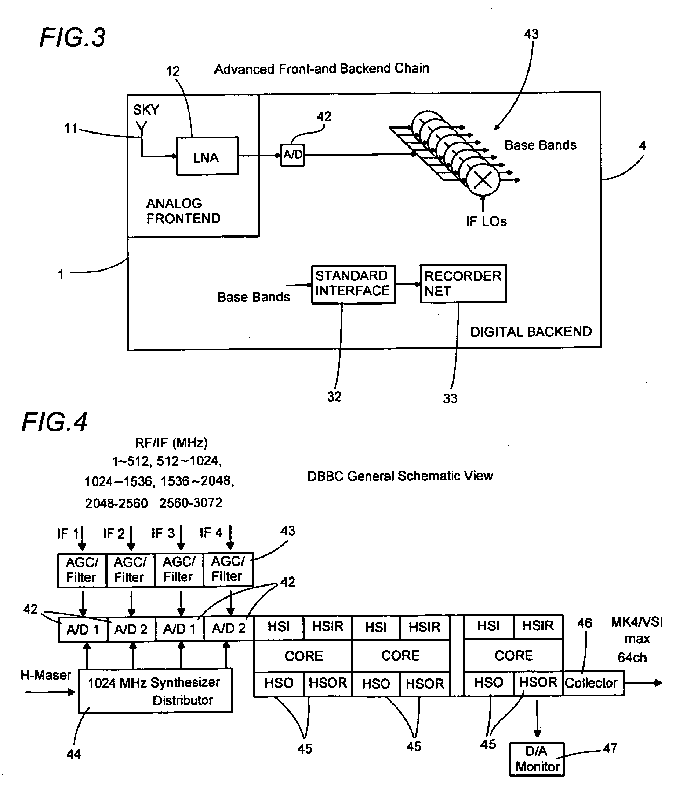

In the case of application in a radio astronomic receiver where the bandwidth of the signals received is greater than 3Ghz, the preferred embodiment of the system is applied as a back-end unit comprising an A/D conversion sub-unit 34, a digital IF to baseband frequency conversion sub-unit 35, and a VSI interface 32, and the radio astronomic receiver can still be schematically represented by Figure 2, already commented with reference to prior art. In the case of application in a radio astronomic receiver where the bandwidth of the signals received is less than or equal to 3Ghz, the radio astronomic receiver can be schematically represented by Figure 3, where, compared to Figure 2, there is no mixer for RF to IF band conversion, and no IF filter, since the bandwidth of the signals received by the antenna 11 is already at intermediate frequency IF.

However, compared to prior art systems, also represented schematically in Figure 2, which use high-frequency A/D converters and combine programmable devices on the same hardware support dimensioned in substantially predetermined manner, the system according to the invention comprises a plurality of hardware modules, that can be connected to each other in parallel and in series to obtain a modular combination that is flexible, even dynamically, and capable of performing complicated processes. In particular, the system according to the invention can be configured to implement local parallel oscillators and digital parallel filters that can operate with very wide bands while keeping a tight control on phase and bandwidth stability of the data processed that is not possible in the analogue domain or in prior art digital solutions.

With reference to Figure 4, the preferred embodiment of the system according to the invention applied to a radio astronomic receiver comprises four printed circuit boards, or PCBs, 42 for A/D conversion, which sample the signals from the respective automatic gain control, or AGC, filters 43 belonging to the receiver front-end stage (not illustrated), at the input of which there are signals belonging to four different IF bandwidths (from the IF filter 14, in the case of a receiver of the type illustrated schematically in Figure 2, or directly from the low-noise amplifier 12, in the case of a receiver of the type illustrated schematically in Figure 3). Preferably, the IF input bandwidths can be selected through the front-end stage in the frequency interval from 0 to 3.072 GHz. Preferably, the four A/D boards 42 operate at a sampling frequency of 1024 MHz supplied by a suitable frequency synthesizer and distributor device 44 (fitted to each board 42) linked to an external reference; this sampling frequency makes it possible to operate with instantaneous bandwidths up to 2.048 GHz in complex sampling mode and with instantaneous bandwidths up to 1.024 GHz in real sampling mode, covering a total bandwidth of more than 3 GHz.

Downstream of the A/D boards 42 there are sixteen PCBs 45 connected in cascade for digitally processing the sampled signals, each of said boards comprising an identical FPGA architecture.

The modular assembly of twenty boards 42 and 45 has a leading-end board (not illustrated) and a trailing-end board 46, having preferably the same circuit configuration, which perform all the service functions of the boards 42 and 45.

In particular, the leading-end board checks the programming operations of all the boards 42 and 45, for example by sending the programming signals to the FPGA boards 45. In this regard, the system can be configured by a user on a computer connected to the system through the leading-end board which accordingly generates the programming signals of the FPGA boards 45 and the setting signals of the A/D boards 42.

The trailing-end board 46 acts as a standard VSI interface providing VLBI output data and monitoring system operation, for example by providing the digital total power measurement of the signal received to drive an automatic system gain control (it being possible for a user to disable said control) and also providing an analogue output signal (through a digital-to-analogue converter) for a monitor 47.

Each of the system boards is connected to the others through three communication channels: a first channel through which the board input signals are transmitted, including the signals sampled by the A/D boards 42; a second channel through which the output data obtained from the FPGA boards 45 are transmitted; and a third configuration and monitoring channel through which, for example, the signals for programming and updating the FPGA board 45 configuration registers, and the data needed by the trailing-end board 46 to monitor system operation are transmitted. Thus, the system according to the invention can distribute processing over the plurality of FPGA boards 45 connected to each other in series or in parallel, in such a way that, for example, each FPGA board 45 performs a process for a well-defined interval of time and/or frequency, operating at a frequency lower than the original sampling frequency, and performing a part of a complex calculation.

For this purpose, each FPGA board 45 comprises, for each of the three channels, two buses, each of which respectively receives and transmits the signals and data of the respective channel, and between which an FPGA device is interposed. The FPGA device is preferably a Xilinx FPGA chip with 1152 pins. In particular, the signals and data are propagated in each board 45 through its FPGA device. Each FPGA board 45 contributes to the regeneration of the signals and data propagated in it, restoring them to their initial conditions, and therefore does not deteriorate the quality of the data and contributes to a very limited extent to the delay time with respect to the clock times of the system.

Looking in more detail, the portion of each channel built into each board comprises in cascade: receiving connectors; the receiving bus comprising controlled impedance and delay connection lines; the FPGA device that regenerates and processes the data; the transmission bus comprising controlled impedance and delay connection lines; and transmission connectors.

The receiving and transmission connectors of each of the three pairs of connectors (for each channel and pair of buses) are superposed, that is to say, are mounted one under the other in identical position on the two faces of the respective FPGA board 45, with opposite electromechanical male-to-female connection, so as to enable a plurality of FPGA boards 45 to be superposed in cascade. Each of the connectors is preferably a surface mount device, (or SMD connector).

The bus connections are preferably of the differential, LVPECL or LVDS type, made using microwire technology with braided elements and controlled impedance, and where the length of each bus line is controlled to within one millimetre; more preferably, the bus connections have a controlled impedance of 50 ohms and lines belonging to the same bus are equal in length.

Preferably, the buses of the first and second channels each comprise 64+64 differential data lines and 4+4 differential clock lines operating at 256 MHZ but able to operate at up to more than 350 MHz, with a total aggregate data rate of approximately 44.8 Gbps. The preferred embodiment of the system according to the invention uses approximately 34 Gbps for the input bus (that is, the one for the first channel) at an operating frequency of around 256 MHz, while the output bus (that is, the one for the second channel) operates at 128 MHz with a total data rate of approximately 16 Gbps.

Each FPGA board 45 also comprises several auxiliary components such as indicator LEDs, a power supply connector for feeding three supply voltages to the board components, and a lithium button battery with two drop-out diodes for the auxiliary power supply.

In the light of the above, an expert in the trade will easily be able to make the portions of the three above mentioned channels necessary for the A/D boards 42, for the leading-end card and for the trailing-end card 46.

In the system according to the invention, each PCB, be it an A/D converter or an FPGA board, can be superposed over the others, making it possible to create a system with a variable number of cards depending on the processes to be applied to the signals received. In the preferred embodiment of the system according to the invention, this variability permits the use of up to four A/D boards 42 and up to sixteen FPGA boards 45 to create up to 64 differential output channels. Even the order of the A/D boards 42 and the FPGA boards 45 in the cascade can be modified, since each FPGA board 45 preferably processes the signals sampled by the A/D boards 42 upstream of it or the data resulting from the processes performed by other FPGA boards 45 upstream of it.

The preferred embodiment of the system according to the invention can be configured in such a way as to operate with four input bandwidths in real sampling mode in the six frequency ranges 0-512 MHz, 512-1024 MHz, 1024-1536 MHz, 1536-2048 MHz, 2048-2560 MHz, and 2560-3072 MHz, or with two input bandwidths in complex sampling mode in the three frequency ranges 1-1024 MHz, 1024-2048 MHz, and 2048-3072 MHz.

Also, the preferred embodiment of the system according to the invention can be configured in such a way as to obtain narrow band output channels (whether real or complex) of 0.25, 0.5, 1, 2, 4, 8 or 16 MHz, or wide band output channels (whether real or complex) of 32, 64, 128, 256, 512, or 1024 MHz.

Further, the preferred embodiment of the system according to the invention can be configured in such a way as to operate with four polarizations or bandwidths available for selecting a single tunable channel in a group comprising up to 64 output channels.

Further still, the preferred embodiment of the system according to the invention can be configured in such a way as to permit variable tuning at intervals of 1 Hz or less.

By way of non-limiting example, the preferred embodiment of the system according to the invention can be configured in such a way as to perform a complex process for converting a single side band, or SSB, frequency to relatively narrow output bandwidths (hereinafter also referred to as bwo) starting from very wide input bandwidths (hereinafter also referred to as bwi), that is to say, for

$$bwo < bwi/16.$$

For this purpose, the system distributes signal processing over two or more FPGA boards 45 in parallel, each pertaining to a well-defined time interval. As mentioned above, the process performed simultaneously by two or more FPGA boards 45, each on a different sub-sequence of samples, makes it possible to operate at a lower frequency than the original frequency. The preferred embodiment of the system according to the invention makes it possible to perform simultaneously in parallel a number of conversions variable from two to eight with the same number of virtually complete conversion stages, by cascade calculations, whereby each calculation uses the previous result to obtain the next result.

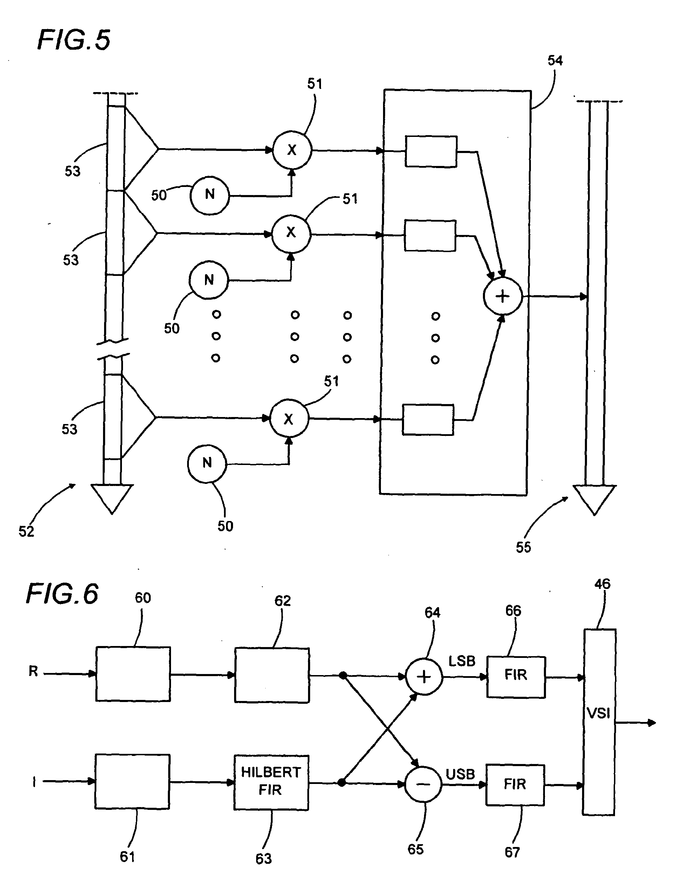

With reference to the logic diagram of Figure 5, which schematically represents a first part of the operations performed by the system of Figure 4 thus configured, it may be observed that in this case the system creates a set of N local oscillators 50 implemented as Direct Digital Synthesizers, o DDS, each of which sends an output signal to a respective digital mixer 51. Each mixer 51 receives from the first communication channel 52, over which are transmitted the samples of the input signal sampled at frequency f, a respective sub-sequence 53 of said samples. In particular, each oscillator 50 and each mixer 51 operate at a frequency of f/N, and each oscillator 50, to correctly perform baseband frequency conversion provides its output data with different phase offsets under equal conditions of interval for each working cycle, which is performed 1/N times less frequently than the sampling frequency. This produces a set of local oscillators 50 to create a similar set of frequency conversions through the digital mixers 51. The outputs of the set of mixers 51 are applied to a polyphase N-channel filter 54 that implements a low-pass filter whose cutoff frequency corresponds to the desired bandwidth which, as stated above, is narrow compared to the input bandwidth. In particular, unlike conventional polyphase filters, the filter 54 does not have an input switch for routing the input samples since these are already divided by the set of mixers 51. The output of the filter 54, whose data are at frequency f/N, is then applied to an output communication channel 55 (preferably coinciding with the next portion of the first channel 53 which transmits the input to the FPGA boards 45 of the system), which transmits the processed data to the next boards.

As may be inferred from Figure 6, which schematically represents a second portion of the operations performed by the system of Figure 4 thus configured, the system then performs the digital process necessary to obtain the side bands of the desired channel. In particular, two stages 60 and 61 like the one of Figure 5 respectively receive the real and imaginary components of the input signal and convert it to baseband. The real baseband component is then delayed by a delay line 62, while the imaginary component is applied to a Hilbert finite impulse response, or FIR, filter 63 which offsets it by 90°. Next, the components thus processed are added and subtracted by an adder 64 and a subtractor 65, respectively, to obtain the signal of the lower side band signal and the signal of the higher side band, respectively. These signals are then sent to respective FIR filters 66 and 67 which better delimit the side bands and, lastly, the signals thus obtained are sent to the VSI interface 46.

Obviously, other embodiments of the system according to the invention may comprise different numbers of A/D and FPGA boards so that they can be extended up to the maximum capability of the hardware resources, making it possible to pass from parallel implementation to ordinary serial implementation for down-conversions of frequency in the digital domain.

The preferred embodiment of the system according to the invention can also be configured in such a way as to obtain wide output bandwidths bwo, preferably variable from bwi/16 to bwi.

In this case, the system of Figure 4 is configured to create a FIR filter in parallel implementation. For a filter with N taps with parallel bandpass filter coefficients h(0)...h(N-1), the output is normally described as

$$y(n) = h(0)x(n) + h(l)x(n-l) + h(2)x(n-2) + ... + h(N-l)x(n-N-l),$$

y(n) = h(0)x(n) + h(1)x(n-1) + h(2)x(n-2) + ... + h(N-1)x(n-N-1), where x(n) is the n-th input sample and y(n) the n-th output data item. The implementation of this relation requires a number of multiplications and additions for each new input data item at the sampling frequency f. If successive sampling data are simultaneously present in a generic set of k values, where k is, for example, 4, the system is configured in such a way as to create a relation of the following type:

$$y(n)=h(0)x(n)+h(l)x(n-l)+h(2)x(n-2)+...+h(N-1)x(n-N-l),$$

$$y(n+1)=h(0)x(n+l)+h(l)x(n)+h(2)x(n-l)+...+h(N-1)x(n-N),$$

$$y(n+2)=h(0)x(n+2)+h(l)x(n+l)+h(2)x(n)+...+ h(N-1)x(n-N+1),$$

$$y(n+3)=h(0)x(n+3)+h(l)x(n+2)+h(2)x(n+l)+...h(N-1)x(n-N+2)$$

In this case, the system receives groups of four samples at a time, using two of these groups for each group of four data items. Every four new input samples, the oldest group present is rejected and the most recent retained. Proceeding iteratively in this way, the operating frequency is reduced to a quarter of the original frequency.

The system according to the invention has obvious advantages.

First of all, the system can perform a frequency conversion according to parallel numeric methods, enabling tuning frequency variations as fast as the system clock period for data transmitted in rapidly switched sequences, or for quasi-simultaneous samplings of different positions of the processed spectrum. In this regard, the system can numerically determine reliably the progress of the stage of generating the signal used as local oscillator in the frequency conversion and can proceed actively in the generating process. A periodic variation at predetermined intervals may therefore be created easily and reliably without any system inertia, the latter being unavoidable in conventional systems, such as PLL systems. Having numeric variators that can be used to rapidly change frequency in totally arbitrary manner, within the limits of the generating system, makes it possible to perform tuning processes that are rapidly variable for predetermined lengths of time, according to a desired pattern set by the signals of the system configuration which may even be dynamic. This method might also be used to create a sophisticated cryptography by distributing the information in synchronized manner in a frequency spectrum occupied in variable manner over time.

Further, the system according to the invention can be used to create a multichannel unit variable in number of channels and bandwidth, which supports the major modes of VLBI radio astronomic acquisitions used today and also permits a significant increase of the bandpass compared to systems currently in use.

The system according to the invention is also extremely compact, by approximately one order of size, more economical than systems currently in use and, thanks to the full use of digital technologies, much more flexible and accurate.

Further, the system according to the invention makes it possible to create digital radio systems that operate at higher frequencies than those currently available for radio astronomic systems.

Moreover, the system according to the invention can be applied in sectors other than radio astronomy, such as, for example, civil, military and space telecommunications. Especially in civil telecommunications, a system capable of significantly reducing costs would be a great advantage for mobile telephony, which would be able to operate without any analogue conversion component. Similarly, the invention might be applied to satellite reception, where the front-end stages are today always analogue, and to broad- or narrow-band land communications. Another sector where rapid data processing technologies are widely used is that of electro-medical instruments. Processes where detection of magnetic fields at frequencies of up to several gigahertz is performed would indeed benefit from the totally numeric process.

The foregoing describes the preferred embodiments and suggested variants of this invention but it shall be understood that the invention may be modified and adapted by experts in the field without thereby departing from the scope of the inventive concept, as defined in the appended claims.

**Claims**

1. A digital multi-channel system for processing radio signals, of the very wide band type, comprising electronic means (34, 35) for the analogue-to-digital, or A/D, conversion of one or more intermediate frequency, or IF, radio signals, and for the subsequent digital frequency conversion of the sampled signals from IF to one or more basebands, the system being **characterized in that** the electronic means (34, 35) are modular and comprise:

   - one or more printed circuit boards, or PCBs, (42) for A/D conversion, each of which samples a respective input signal IF at a sampling frequency f; and
   - one or more PCBs (45) for digitally processing digital signals, each of which comprises a FPGA device;

   said one or more A/D boards (42) and said one or more FPGA boards (45) being connected to each other in cascade along at least two communication channels comprising a first channel through which the input signals are transmitted to the boards (42, 45), and a second channel through which the output data obtained from digital frequency conversion and digital processing of the sampled signals are transmitted, one portion of each channel being built into each FPGA board (45) where it comprises in cascade: receiving connectors; a receiving bus comprising controlled impedance and delay connection lines; the FPGA device that regenerates and processes the data; a transmission bus comprising controlled impedance and delay connection lines; and transmission connectors; in such a way that the system distribute signal processing in series and/or in parallel over said one or more FPGA boards (45), so that each FPGA board (45) performs a part of the digital process, operating more preferably at a lower frequency than the sampling frequency f

wherein for each channel, the receiving connectors and the transmission connectors are superposed, that is to say, are mounted one under the other in identical position on two opposite faces of the respective FPGA board (45), with opposite electromechanical male-to-female connection.

2. The system according to claim 1 wherein each of the connectors is a surface mount device (or SMD connector).

3. The system according to claim 1 or 2, **characterized in that**, for each channel, the receiving and transmission bus connection lines are of the differential type, preferably according to the LVPECL or LVDS standard, more preferably made using microwire technology with braided elements, controlled impedance, and length controlled to within one millimetre; and even more preferably, with controlled impedance of 50 ohms and lines belonging to the same bus being equal in length, each of the receiving and transmission buses comprising most preferably 64+64 differential data lines and 4+4 differential clock lines.

4. The system according to any of the foregoing claims, **characterized in that** it further comprises, at the trailing end of the cascade, a final PCB (46) operating as an output interface to provide the data obtained from digital frequency conversion and digital processing of the sampled signals, the trailing-end board (46) preferably monitoring system operation, more preferably providing a digital total power measurement of the one or more IF frequency radio signals and/or driving an automatic system gain control, most preferably being able to be disabled and/or providing an analogue output signal, most preferably through a digital-analogue converter, that can be used by a monitor (47).

5. The system according to any of the foregoing claims, **characterized in that** it further comprises, at the leading end of the cascade, an initial PCB for checking the programming operations of the FPGA boards (45), preferably by sending configuration register programming and updating signals and/or the signals for setting the A/D boards (42) over a third configuration and monitoring channel along which the one or more A/D boards (42) and the one or more FPGA boards (45) are also connected in cascade, the leading-end PCB being even more preferably connectable to a controlling computer.

6. The system according to any of the foregoing claims, **characterized in that** it is designed to perform a complex digital process for converting a single side band, or SSB, frequency to an output bandwidth bwo starting from a bandwidth bwi where

$$bwo < bwi/16,$$

in such a way as to create:

- two stages (60, 61) that receive, respectively, the real and imaginary components of the one or more IF frequency radio signals and convert them to output baseband bwo;
- a delay line (62) that delays the real component;
- a Hilbert finite impulse response, or FIR, filter (63) that offsets the imaginary component by 90°;
- an adder (64) and a subtractor (65) that respectively add and subtract the data from the delay line (62) and from the Hilbert FIR filter (63) to obtain the data of the lower side band and the data of the higher side band, respectively;

the system creating, for each of the two stages (60, 61) of conversion to the output baseband bwo, a set of N local oscillators (50), preferably implemented as direct digital synthesizers, or DDS, each of which sends an output signal to a respective digital mixer (51) that receives from the first communication channel (52) a respective sub-sequence (53) of samples of the one or more IF frequency radio signals, each oscillator (50) and each mixer (51) operating at a frequency of f/N, each oscillator (50) providing its output data with different phase offsets under equal conditions of interval for each working cycle at f/N, the outputs of the set of mixers (51) being applied to polyphase filter (54) with N channels that implements a low-pass filter whose cutoff frequency corresponds to the baseband bwo, the output of the polyphase filter (54) being then applied to an output communication channel (55) preferably coinciding with the next portion of the first channel (53).

7. The system according to any of the foregoing claims, **characterized in that** it is designed to perform a digital process for converting to an output bandwidth bwo starting from a bandwidth bwi where

$$bwi/16 \leq bwo \leq bwi,$$

in such a way as to create bandpass FIR filter in parallel implementation with M branches, said FIR filter having N taps, where M≤N, or taps with bandpass filter coefficients h(0)...h(N-1) and sequentially receiving as input groups of M samples of the one or more IF frequency radio signals, each branch processing, after receiving a complete new group of M input samples, an output data item of a group of M temporally consecutive output data items from the bandpass FIR filter, the oldest group of M samples being rejected from the system after receiving a complete new group of M input samples.

8. The system according to claim 4, or according to any of the claims from 5 to 7 when dependent on claim 4, **characterized in that** it operates as the back-end unit in the data acquisition chain for very long base interferometry (VLBI), the trailing-end board (46) acting as VLBI Standard Interface (VSI) connectable to a sub-unit (33) for recording and/or transmitting data.

9. A radio astronomic receiver comprising a digital back-end unit, **characterized in that** said digital back-end unit is a digital multi-channel system for processing radio signals according to claim 8.

**Patentansprüche**

1. Digitales Mehrkanalsystem zum Verarbeiten von Funksignalen eines sehr breitbandigen Typs, umfassend elektronische Mittel (34, 35) für die Analog-Digital-oder A-/D-Umwandlung eines oder mehrerer Zwischenfrequenz- oder IF-Funksignale und für die folgende digitale Frequenzumwandlung der abgetasteten Signale von IF in ein oder mehrere Basisbande, wobei das System **dadurch gekennzeichnet ist, dass** die elektronischen Mittel (34, 35) modular sind und umfassen:

   - eine oder mehrere Leiterplatten oder LP (42) für die A-/D-Umwandlung, die jeweils ein jeweiliges IF-Eingangssignal bei einer Abtastfrequenz f abtasten; und
   - eine oder mehrere LP (45) für die digitale Verarbeitung von Digitalsignalen, die jeweils eine FPGA-Vorrichtung umfassen,

   wobei die genannte(n) eine oder mehreren A-/D-Platte(n) (42) und die genannte(n) eine oder mehreren FPGA-Platte(n) (45) in Kaskadenschaltung an mindestens zwei Kommunikationskanälen aneinander angeschlossen sind, umfassend einen ersten Kommunikationskanal, durch den die Eingangssignale an die Platten (42, 45) übermittelt werden, und einen zweiten Kanal, durch den die Ausgangsdaten, erzielt durch die digitale Frequenzumwandlung und die digitale Verarbeitung der abgetasteten Signale übermittelt werden, wobei ein Abschnitt jedes Kanals in jede FPGA-Platte (45) integriert ist, wobei diese in Kaskadenschaltung umfasst: Empfangsverbinder, eine Empfangsbusleitung, umfassend gesteuerte Impedanz- und Verzögerungsanschlussleitungen, die FPGA-Vorrichtung, die die Daten regeneriert und verarbeitet, eine Übertragungsbusleitung, umfassend gesteuerte Impedanz- und Verzögerungsanschlussleitungen, sowie Übertragungsverbinder, sodass das System das Signalverarbeiten in Reihe und/oder parallel über die genannte(n) eine oder mehreren FPGA-Platte(n)(45) verteilt, sodass jede FPGA-Platte (45) einen Teil des Digitalprozesses durchführt und dabei noch besser bei einer niedrigeren Frequenz als der Abtastfrequenz f arbeitet, wobei die Empfangsverbinder und die Übertragungsverbinder für jeden Kanal übereinandergelagert bzw, untereinander an einer identischen Position an zwei entgegengesetzten Flächen der jeweiligen FPGA-Platte (45) mit einer entgegengesetzten Stecker-Buchsen-Verbindung montiert sind.

2. System nach Anspruch 1, wobei jeder der Verbinder eine oberflächenmontierte Vorrichtung (oder SMD-Verbinder) ist.

3. System nach Anspruch 1 oder 2, **dadurch gekennzeichnet, dass** die Empfangs- und Übertragungsbusanschlussleitungen unterschiedlichen Typs sind, vorzugsweise nach dem LVPECL- oder LVDS-Standard, noch besser hergestellt unter Verwendung der Microwire-Technologie mit geflochtenen Elementen, gesteuerter Impedanz und kontrollierter Länge bis innerhalb eines Millimeters und noch besser mit einer gesteuerten Impedanz von 50 Ohm und Leitungen, die zur selben Busleitung gehören und die gleiche Länge aufweisen, wobei jede der Empfangs- und Übertragungsbusleitungen am besten 64+64 Differentialdatenleitungen und 4+4 Differentialtaktleitungen umfasst.

4. System nach einem der vorangehenden Ansprüche, **dadurch gekennzeichnet, dass** es zudem am Bandende der Kaskadenschaltung eine abschließende LP (46) umfasst, die als Ausgangsschnittstelle arbeitet, um die durch die digitale Frequenzumwandlung und die digitale Verarbeitung der abgetasteten Signale erhaltenen Daten zur Verfügung zu stellen, wobei die Bandendenplatte (46) vorzugsweise den Systembetrieb überwacht, noch besser eine digitale Messung der Gesamtleistung des einen IF-Funksignals oder der mehreren IF-Funksignale zur Verfügung stellt und/oder eine automatische Systemverstärkungskontrolle antreibt, die am besten in der Lage ist, deaktiviert zu werden und/oder ein analoges Ausgangssignal zur Verfügung zu stellen, am besten durch einen Digital-Analog-Wandler, der über einen Monitor (47) verwendet werden kann.

5. System nach einem der vorangehenden Ansprüche, **dadurch gekennzeichnet, dass** es zudem am vorderen Ende der Kaskadenschaltung eine anfängliche LP zur Überprüfung der Programmiervorgänge der FPGA-Platten (45) umfasst, vorzugsweise durch das Senden von Signalen zum Programmieren und Aktualisieren des Konfigurationsregisters und/oder der Signale zum Setup der A-/D-Platten (45) über einen dritten Konfigurations- und Überwachungskanal, an dem die eine oder die mehreren A-/D-Platte(n) (42) und die eine oder die mehreren FPGA-Platte (n) ebenso in Kaskadenschaltung angeschlossen sind, wobei die LP am vorderen Ende noch besser an einen Überwachungscomputer angeschlossen werden kann.

6. System nach einem der vorangehenden Ansprüche, **dadurch gekennzeichnet, dass** es ausgelegt ist, um einen komplexen digitalen Prozess zum Umwandeln einer Einseitenband- oder SSB-Frequenz in eine Ausgangsbandbreite bwo zu verwandeln, ausgehend von einer Bandbreite bwi, wobei

$$bwo < bwi/16,$$

sodass geschaffen werden:

- zwei Phasen (60, 61), die jeweils die realen und imaginären Komponenten des einen IF-Funksignals oder der mehreren IF-Funksignale empfangen und in Ausgangsbasisband bwo umwandeln;
- eine Verzögerungsleitung (62), die die reale Komponente verzögert;
- einen Hilbert-Filter mit endlicher Impulsantwort oder FIR-Filter (63), der die imaginäre Komponente um 90° versetzt;
- einen Addierer (64) und einen Subtrahierer (65), die die Daten jeweils von der Verzögerungsleitung (62) und vom Hilbert-FIR-Filter (63) addieren und subtrahieren, um jeweils Daten des niedrigeren Seitenbands und Daten des höheren Seitenbands zu erhalten;

wobei das System für jede der zwei Phasen (60, 61) der Umwandlung in das Ausgangsbasisband bwo einen Satz N lokaler Oszillatoren (50) schafft, vorzugsweise implementiert als direkte digitale Synthesizer oder DDS, von denen jeder ein Ausgangssignal an einen jeweiligen digitalen Mixer (51) sendet, der vom ersten Kommunikationskanal (52) eine jeweilige Subsequenz (53) an Abtastungen des einen IF-Funksignals oder der mehreren IF-Funksignale empfängt, wobei jeder Oszillator (50) und jeder Mixer (51) bei einer Frequenz f/N arbeitet, jeder Oszillator (50) seine Ausgangsdaten mit unterschiedlichen Phasenversätzen unter gleichen Intervallbedingungen für jeden Betriebszyklus bei f/N liefert, die Ausgänge des Satzes der Mixer (51) an einen mehrphasigen Filter (54) mit N Kanälen angebracht werden, der einen Tiefpassfilter implementiert, dessen Abschneidefrequenz dem Basisband bwo entspricht, der Ausgang des mehrphasigen Filters (54) anschließend an einen Ausgangskommunikationskanal (55) angebracht wird, der vorzugsweise mit dem nächsten Abschnitt des ersten Kanals (53) übereinstimmt.

7. System nach einem der vorangehenden Ansprüche, **dadurch gekennzeichnet, dass** es ausgelegt ist, um einen digitalen Prozess zum Umwandeln einer Ausgangsbandbreite bwo durchzuführen, ausgehend von einer Bandbreite bwi, wobei

$$bwi/16 \leq bwo \leq bwi,$$

sodass ein Bandpass-FIR-Filter in paralleler Implementierung mit M Zweigen geschaffen wird, wobei der genannte FIR-Filter N Zapfen aufweist, wobei M≤N, oder Zapfen mit Bandpassfilterkoeffizienten h(0)...h(N-1) und sequenziell als Input Gruppen von M Abtastungen des einen IF-Funksignals oder der mehreren IF-Funksignale empfängt, wobei jeder Zweig nach dem Empfangen einer kompletten neuen Gruppe von M Eingangsabtastungen ein Ausgangsdatenwort von einer Gruppe von M zeitlich aufeinanderfolgenden Ausgangsdatenwörtern vom Bandpass-FIR-Filter verarbeitet und die älteste Gruppe der M Abtastungen vom System ausgesondert wird, nachdem eine komplette neue Gruppe von M Eingangsabtastungen empfangen wurde.

8.  System nach Anspruch 4 oder nach einem der Ansprüche 5 bis 7, sofern diese von Anspruch 4 abhängen, **dadurch gekennzeichnet, dass** es als Back-End-Einheit in der Datenerfassungskette für eine Very Long Base Interferometry (VLBI) arbeitet, wobei die Bandendenplatte (46) als VLBI-Standardschnittstelle (VSI) arbeitet, die an eine Untereinheit (33) angeschlossen werden kann, um Daten aufzuzeichnen und/oder zu übermitteln.

9.  Funkastronomie-Empfänger, umfassend eine digitale Back-End-Einheit, **dadurch gekennzeichnet, dass** die genannte digitale Back-End-Einheit ein digitales Mehrkanalsystem zum Verarbeiten von Funksignalen nach Anspruch 8 ist.

**Revendications**

1.  Système multi-canal numérique pour traiter des signaux radio, du type bande ultralarge, comprenant des moyens électroniques (34, 35) pour la conversion analogique/numérique, ou A/N, d'un ou de plusieurs signaux radio à fréquence intermédiaire, ou FI, puis pour la conversion de fréquence numérique des signaux échantillonnés de FI à une ou plusieurs bandes de base, le système **se caractérisant en ce que** les moyens électroniques (34, 35) sont nodulaires et comprennent :

    - un ou plusieurs circuits imprimés, ou PCB, (42) pour la conversion A/N, échantillonnant chacun un signal d'entrée respectif FI à une fréquence d'échantillonnage f ; et
    - un ou plusieurs PCB (45) pour traiter numériquement les signaux numériques, comprenant chacun un dispositif FPGA ;

    ledit un ou plusieurs circuits A/N (42) et ledit un ou plusieurs circuits FPGA (45) étant reliés en cascade le long d'au moins deux canaux de communication comprenant un premier canal, par lequel sont transmis les signaux d'entrée aux circuits (42, 45), et un deuxième canal, par lequel sont transmises les données de sortie obtenues à partir de la conversion de fréquence numérique et du traitement numérique des signaux échantillonnés, une partie de chaque canal étant construite dans chaque circuit FPGA (45), où elle comprend en cascade : des connecteurs de réception ; un bus de réception comprenant des lignes à impédance contrôlée et à retard de connexion ; le dispositif FPGA qui régénère et traite les données ; un bus de transmission comprenant des lignes à impédance contrôlée et à retard de connexion ; et des connecteurs de transmission ; de sorte que le système distribue un traitement du signal en série et/ou en parallèle sur lesdits un ou plusieurs circuits FPGA (45), afin que chaque circuit FPGA (45) exécute une partie du traitement numérique, utilisant, de manière plus préférentielle, une fréquence plus basse que la fréquence d'échantillonnage f, où, pour chaque canal, les connecteurs de réception et les connecteurs de transmission sont superposés, c'est-à-dire, montés l'un sous l'autre, en position identique, sur deux faces opposées du circuit FPGA respectif (45), avec une connexion électromécanique opposée mâle/femelle.

2.  Système selon la revendication 1, dans lequel chaque connecteur est un composant monté en surface (ou connecteur CMS).

3.  Système selon les revendications 1 ou 2, **caractérisé en ce que**, pour chaque canal, les lignes de connexion des bus de réception et de transmission sont du type différentielles, de préférence, selon le standard LVPECL ou LVDS, de manière plus préférentielle, fabriquées via la technologie Microwire avec des éléments tressés, une impédance contrôlée et une longueur contrôlée au millimètre près ; et de façon encore plus préférentielle, avec une impédance contrôlée de 50 ohms et des lignes appartenant au même bus de longueur identique, chacun des bus de réception et de transmission comprenant, encore plus préférentiellement, 64+64 lignes de données différentielles et 4+4 lignes d'horloge différentielles.

4.  Système selon l'une quelconque des revendications précédentes, **caractérisé en ce qu'**il comprend aussi, à l'extrémité arrière de la cascade, un PCB final (46) servant d'interface de sortie pour fournir les données obtenues à partir de la conversion de fréquence numérique et du traitement numérique des signaux échantillonnés, le circuit d'extrémité arrière (46), de préférence, surveillant le fonctionnement du système, de manière plus préférentielle, fournissant une mesure de la puissance totale numérique d'un ou de plusieurs signaux radio à fréquence FI et/ou entraînant un contrôle du gain de système automatique, encore plus préférentiellement, pouvant être désactivé et/ou fournissant un signal de sortie analogique, plus préférentiellement, par un convertisseur numérique/analogique, qui peut être utilisé par un moniteur (47).

5. Système selon l'une quelconque des revendications précédentes, **caractérisé en ce qu'**il comprend aussi, à l'extrémité avant de la cascade, un PCB initial pour vérifier les opérations de programmation des circuits FPGA (45), de préférence, en envoyant la programmation du registre de configuration et en mettant à jour les signaux et/ou les signaux pour faire passer les circuits A/N (42) à une troisième configuration et en surveillant le canal le long duquel un ou plusieurs circuits A/N (42) et un ou plusieurs circuits FPGA (45) sont aussi reliés en cascade, le PCB d'extrémité avant pouvant être, de manière encore plus préférentielle, relié à un ordinateur de commande.

6. Système selon l'une quelconque des revendications précédentes, **caractérisé en ce qu'**il est conçu pour exécuter un traitement numérique complexe pour convertir une fréquence en bande latérale unique, ou SSB, en un largeur de bande de sortie bwo depuis une largeur de bande bwi, où

$$bwo < bwi/16,$$

de sorte à former :

- deux phases (60, 61) qui reçoivent, respectivement, les parties réelles et imaginaires d'un ou de plusieurs signaux radio à fréquence FI et les convertissent en une bande de base de sortie bwo ;
- une ligne à retard (62) qui retarde la partie réelle ;
- un filtre à réponse impulsionnelle finie Hilbert, ou RIF (63), qui déphase la partie imaginaire de 90°;
- un additionneur (64) et un soustracteur (65) qui ajoutent et soustraient respectivement les données de la ligne à retard (62) et du filtre Hilbert RIF (63) pour obtenir les données de la bande latérale inférieure et les données de la bande latérale supérieure, respectivement ;

le système créant, pour chacune des deux phases (60, 61) de conversion dans la bande de base de sortie bwo, un ensemble d'oscillateurs locaux N (50), de préférence implémentés en synthétiseurs numériques directs, ou DDS, envoyant chacun un signal de sortie à un mélangeur numérique respectif (51) qui reçoit, du premier canal de communication (52), une sous-séquence respective (53) d'échantillons d'un ou de plusieurs signaux radio à fréquence FI, chaque oscillateur (50) et chaque mélangeur (51) fonctionnant à une fréquence de f/N, chaque oscillateur (50) fournissant ses données de sortie avec différents déphasages de phase dans des conditions d'intervalle égales pour chaque cycle de travail à f/N, les sorties de l'ensemble des mélangeurs (51) s'appliquant à un filtre polyphasé (54) avec des canaux N qui implémente un filtre passe-bas, dont la fréquence limite correspond à la bande de base bwo, la sortie du filtre polyphasé (54) s'appliquant alors à un canal de communication de sortie (55), de préférence coïncidant avec la partie suivante du premier canal (53).

7. Système selon l'une quelconque des revendications précédentes, **caractérisé en ce qu'**il est conçu pour exécuter un traitement numérique pour convertir une largeur de bande de sortie bwo depuis une largeur de bande bwi, où

$$bwi/16 \leq bwo \leq bwi,$$

de sorte à créer des filtres passe-bandes RIF en implémentation parallèle avec des branches M, ledit filtre RIF ayant des taps N, où M≤N, ou des taps avec des coefficients du filtre passe-bande h(0)...h(N-1), et recevant, en séquence, en groupes d'entrée des échantillons M d'un ou de plusieurs signaux radio à fréquence FI, chaque branche traitant, après réception d'un nouveau groupe complet d'échantillons d'entrée M, un attribut de sortie d'un groupe d'attributs de sortie M consécutifs dans le temps du filtre passe-bande RIF, le plus vieux groupe d'échantillons M étant rejeté du système après réception d'un nouveau groupe complet d'échantillons d'entrée M.

8. Système selon la revendication 4, ou selon l'une quelconque des revendications 5 à 7, lorsqu'elles dépendent de la revendication 4, **caractérisé en ce qu'**il fonctionne comme l'unité finale dans la chaîne d'acquisition des données pour l'interférométrie à très longue base (VLBI), le circuit d'extrémité arrière (46) agissant en interface standard VLBI (VSI) pouvant être reliée à une sous-unité (33) pour enregistrer et/ou pour transmettre les données.

9. Récepteur de radioastronomie comprenant une unité finale numérique, **caractérisé en ce que** ladite unité finale numérique est un système multi-canal numérique pour traiter les signaux radio selon la revendication 8.

FIG.1    Front-and Back-End Multichannel Chain

FIG.2    Advanced Front-and Backend Chain

## FIG.3

Advanced Front-and Backend Chain

SKY

ANALOG FRONTEND

LNA

A/D

Base Bands

IF LOs

Base Bands

STANDARD INTERFACE

RECORDER NET

DIGITAL BACKEND

11  12  42  43  4  1  32  33

## FIG.4

RF/IF (MHz)
1~512, 512~1024,
1024~1536, 1536~2048,
2048-2560  2560-3072

DBBC General Schematic View

IF 1  IF 2  IF 3  IF 4  43

| AGC/ Filter | AGC/ Filter | AGC/ Filter | AGC/ Filter |
|---|---|---|---|

42

| A/D 1 | A/D 2 | A/D 1 | A/D 2 | HSI | HSIR | HSI | HSIR | HSI | HSIR |
|---|---|---|---|---|---|---|---|---|---|
| | | | | CORE | | CORE | | CORE | |
| | | | | HSO | HSOR | HSO | HSOR | HSO | HSOR |

H-Maser

1024 MHz Synthesizer Distributor

Collector

MK4/VSI max 64ch

D/A Monitor

42  44  45  45  45  46  47

*FIG.5*

*FIG.6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004049609 A
- US 2006126569 A
- US 2006015674 A
- US 2004190553 A
- US 2006291428 A